# EUROPÄISCHE PATENTSCHRIFT

(11) **EP 1 831 036 B1**
(45) Veröffentlichungstag und Bekanntmachung des Hinweises auf die Patenterteilung: **29.07.2009**
(21) Anmeldenummer: 05850365.7
(22) Anmeldetag: 28.12.2005
(51) Int. Cl.: B60C 29/02, F16J 15/02

(54) **REIFENVENTIL UND FORMDICHTUNG FÜR EIN REIFENVENTIL**
TIRE VALVE AND MOLDING SEAL FOR A TIRE VALVE
VALVE DE PNEU, ET GARNITURE D'ETANCHEITE MOULEE POUR VALVE DE PNEU

(30) Priorität: 30.12.2004 DE 202004020121 U
(43) Veröffentlichungstag der Anmeldung: 12.09.2007
(73) Patentinhaber: Alligator Ventilfabrik GmbH, D-89537 Giengen (DE)
(72) Erfinder: PALAORO, Renato, 89518 Heidenheim (DE)
(74) Vertreter: Behrmann, Niels
(86) Internationale Anmeldenummer: PCT/EP2005/014083
(87) Internationale Veröffentlichungsnummer: WO 2006/072437

(56) Entgegenhaltungen:
- DE-U1- 20 015 467
- GB-A- 827 524
- PATENT ABSTRACTS OF JAPAN Bd. 2002, Nr. 02, 2. April 2002 (2002-04-02) -& JP 2001 287521 A (PACIFIC IND CO LTD), 16. Oktober 2001 (2001-10-16)

## Beschreibung

Die vorliegende Erfindung betrifft ein Reifenventil, insbesondere Gas- und/oder Luftreifenventil, nach dem Oberbegriff des Hauptanspruches sowie eine Formdichtung, welche insbesondere zur Verwendung in einem derartigen Ventil geeignet und vorgesehen ist.

Aus dem Stand der Technik sind für die Abdichtung gegen Luftverlust zwischen einem Luftreifenventil und der dieses umgebenden Ventilbohrung (im weiteren auch: Felgenbohrung) in der Luftreifenfelge verschiedene Ansätze bekannt. Zum einen existieren sog. Schulter- bzw. Flachdichtungen, zum anderen werden O-Ring-Dichtungen verwendet.

Beide Lösungen sind jedoch, jeweils für sich betrachtet, technisch nachteilig: Eine typischerweise aus einem flachen Gummiring bestehende und ggf. mit einem Schulterabschnitt versehene Schulter- bzw. Flachdichtung stellt relativ geringe Ansprüche an die Ebenheit der Auflagefläche (d.h. den außengelegenen flachen Randabschnitt der Felgenbohrung) sowie an die Lochtoleranzen dieser Felgenbohrung, da das große Gummivolumen derartiger Dichtungen Abweichungen in einfacher Weise ausgleicht. Nachteilig ist jedoch, dass beim Einbau von Ventilen mit derartigen Dichtungen (niedrige) Drehmomentgrenzen nicht überschritten werden dürfen, dies würde zur Zerstörung der Dichtung führen. Da sich zudem die Dichtungselemente unter Druck verformen, ergeben sich in der Regel und in nachteiliger Weise sehr geringe Lösemomente für die das Ventil befestigende Überwurfmutter.

Dagegen ermöglichen die bekannten O-Ring-Dichtungen sehr viel höhere Anzugsmomente, da die Überwurfmutter unmittelbar auf den Randabschnitt der Felgenbohrung greift und insoweit ein Metall-Metall-Kontakt besteht; vorteilhaft sind entsprechend hohe Lösemomente für die befestigende Überwurfmutter erzielbar. Dagegen ist nachteilig, dass eine derartige O-Ring-Dichtung sehr hohe Anforderungen an die Ebenheit der Auflagefläche im Felgenbohrungs-Randbereich sowie die Bohrungstoleranzen selbst stellt, so dass hier teils beträchtlicher zusätzlicher Aufwand für die Fertigung und Montage notwendig ist.

Aus der DE 200 15 467 U1 der Anmelderin ist ein Reifenventil mit einem eine Felgenbohrung einer Fahrzeugfelge durchgreifenden Ventilkörper bekannt, der einen im montierten Zustand auf einer Seite der Felge angeordneten unteren Ventilkörperabschnitt sowie einen aus der Felgenbohrung ragenden oberen Ventilkörperabschnitt ausbildet und im Bereich des oberen Ventilkörperabschnitts zum Zusammenwirken mit einer Überwurfmutter ausgebildet ist. Der untere Ventilkörperabschnitt dieses Ventils weist einen Ringabsatz auf, welcher, mit einem zwischenliegenden Abschnitt einer Formdichtung, mittels der Überwurfmutter gegen einen flachen Randabschnitt der Felgenbohrung verspannt wird. In dem verspannten Zustand wird ein Abschnitt der Formdichtung in die Ringdichtung hineingedrückt. Ferner besitzt die aus dieser Druckschrift bekannte Formdichtung einen Vertikalabschnitt, welcher den oberen Ventilkörperabschnitt umgreift und dichtend mit einer ringförmigen Stirnfläche der Felgenbohrung zusammenwirkt.

Die GB 827,524 sowie die JP 2001 287521 offenbaren ähnliche Reifenventile, wobei allen Ansätzen aus dem Stand der Technik gemeinsam ist, dass der jeweilige Formdichtungsabschnitt im Bereich der Felgenbohrung ein Anzugsmoment aufnehmen muss und ein Überschreiten einer (gummibedingt) niedrigen Drehmomentgrenze, wie eingangs dargelegt, zur Zerstörung der Dichtung führen kann.

Aufgabe der vorliegenden Erfindung ist es daher, eine verbesserte Luftabdichtung zwischen einem Reifenventil und der dieses umgebenden Reifenfelge zu schaffen, wobei diese Dichtung zum einen geringere Anforderungen an die Oberflächenbeschaffenheit bzw. Ebenheit der Felgenoberfläche im Felgenbohrungs-Randbereich stellen soll, zum anderen jedoch hohe Anzugsmomente für die das Ventil befestigende Oberwurfmutter sichergestellt werden sollen.

Die Aufgabe wird durch die Anordnung eines Reifenventils und einer Formdichtung mit den Merkmalen der unabhängigen Ansprüche gelöst; vorteilhafte Weiterbildungen der Erfindung sind in den Unteransprüchen beschrieben.

In erfindungsgemäß vorteilhafter Weise werden durch die vorliegende Lösung die günstigen Eigenschaften beider eingangs beschriebenen Dichtungsmethoden kombiniert, während die jeweiligen Nachteile wirksam vermieden werden können: So ermöglicht es der am unteren Ventilkörperabschnitt gebildete Ringabsatz, dass, zusammen mit der Überwurfmutter, eine Metall-Metall-Verbindung in verspanntem Zustand mit hohem Anzugs- und Lösemoment realisiert werden kann. Gleichzeitig sorgt die Dichtwirkung des in der durch die Ringnut im unteren Ventilkörperabschnitt und den Randabschnitt der Felgenbohrung gebildeten Kammer dichtend sitzenden Kammerabschnitts der erfindungsgemäßen Formdichtung in Verbindung mit dem an dem Kammerabschnitt einstückig ansitzenden Vertikalabschnitt dafür, dass sowohl der flache Randabschnitt im Bereich der Felgenbohrung, als auch die ringförmige Stirnfläche der Bohrung wirksam von Dichtmaterial umschlossen sind und selbst hohe Bohrungstoleranzen und Oberflächen-Unebenheiten den nicht zuletzt durch das beachtliche Gummivolumen und die große Gummi-Kontaktfläche ermöglichte Dichtvermögen nicht nachteilig beeinträchtigen.

Dabei hat es sich zudem als vorteilhaft herausgestellt, dass eine derartige, einen abgestuften (ringabsatzförmigen) Übergangsbereich ausbildende Formdichtung auch besonders wirksam zum Abdichten von eine Fasierung aufweisenden Felgenbohrungen geeignet ist; in montiertem und verspanntem Zustand würde nämlich diese Ringfase auf den Ringabsatz der Formdichtung greifen bzw. in diesen hineingepresst werden, so dass, nahezu unabhängig von einer jeweiligen Fasenbreite (bzw., bei in der Praxis auftretenden Schwankungen), eine wirksame Abdichtung erfolgen kann.

In diesem Zusammenhang ist es dabei auch vorteilhaft, wenn am oberen Ventilkörperabschnitt im Bereich der Ventilbohrung (Felgenbohrung) eine umlaufende flache Nut vorgesehen ist, in welche in dem verspannten Zustand das Gummimaterial des Vertikalabschnitts hineingepresst wird.

Die Formdichtung selbst zeichnet sich vorteilhaft durch eine auswärts gerichtete Abstufung (zum Bilden des außenliegenden Ringabsatzes) aus, während innenliegend ein homogener Übergang zwischen Vertikal- und Kammerabschnitt realisiert ist. Geeignet kann der Innen- oder Außenbereich konisch zulaufend ausgebildet sein, insbesondere im Bereich des Vertikalabschnitts, und vorteilhaft ist zudem, wenn die durch den außenliegenden Ringabsatz ausgebildete ringförmige Dichtfläche, bezogen auf die durch die Felgenbohrung beschriebene Fläche, nicht parallel (also rein horizontal) verläuft, sondern gegenüber dieser leicht geneigt ist.

Während üblicherweise im Rahmen der Erfindung der untere Ventilkörperabschnitt mit dem von ihm ausgebildeten Ringabsatz bzw. der Kammer für die Formdichtung in einem Felgeninneren angeordnet ist, ist es gleichwohl von der vorliegenden Erfindung mit umfasst, das erfindungsgemäße Befestigungsprinzip umzukehren: In diesem Fall würde ein unterer Ventilkörperabschnitt außerhalb der Felge sitzen (ggf. mit den weiteren Ventilelementen), entsprechend den ringförmigen Kammerabschnitt für die Formdichtung von außen auf die Felge aufbilden, während die Überwurfmutter dann vom Felgeninneren her mit dem oberen Ventilkörperabschnitt bzw. der Felge im Bereich der Felgen- bzw. Ventilbohrung zusammenwirkt.

Im Ergebnis werden durch die vorliegende Erfindung günstige Toleranz- und Oberflächeneigenschaften der Dichtung mit hohen Anzugs- und Lösemomenten für die Befestigung der Oberwurfmutter kombiniert, so dass der vorliegenden Erfindung insbesondere auch Anwendungsgebiete mit größeren Fertigungstoleranzen erschlossen sind.

Weitere Vorteile, Merkmale und Einzelheiten ergeben sich aus der nachfolgenden Beschreibung bevorzugter Ausführungsbeispiele sowie anhand der Zeichnungen; diese zeigen in
- Fig. 1:: eine schematische Schnittansicht eines in einer Fahrzeugfelge montierten Luftreifenventils bei unfasierter Ventilbohrung;
- Fig. 2:: eine vergrößerte Detailansicht des Abschnitts II in Fig. 1 zum Verdeutlichen der Einbau- und Dichtungsposition der Formdichtung in der Anordnung der Fig. 1;
- Fig. 3:: eine Schemadarstellung analog Fig. 2, jedoch mit Fase im unteren Ventil- bzw. Felgenbohrungsbereich im Anlagebereich der Dichtung;
- Fig. 4:: eine Darstellung analog Fig. 2, jedoch bei gegenüber der Anordnung der Fig. 1 bis 3 vergrößerter Ventilbohrung;
- Fig. 5: eine Darstellung analog Fig. 3, jedoch vergrößerter Ventilbohrung und vergrößerter Fase und
- Fig. 6:: eine Querschnittsansicht der Formdichtung zur Verwendung in den beschriebenen Ausführungsbeispielen.

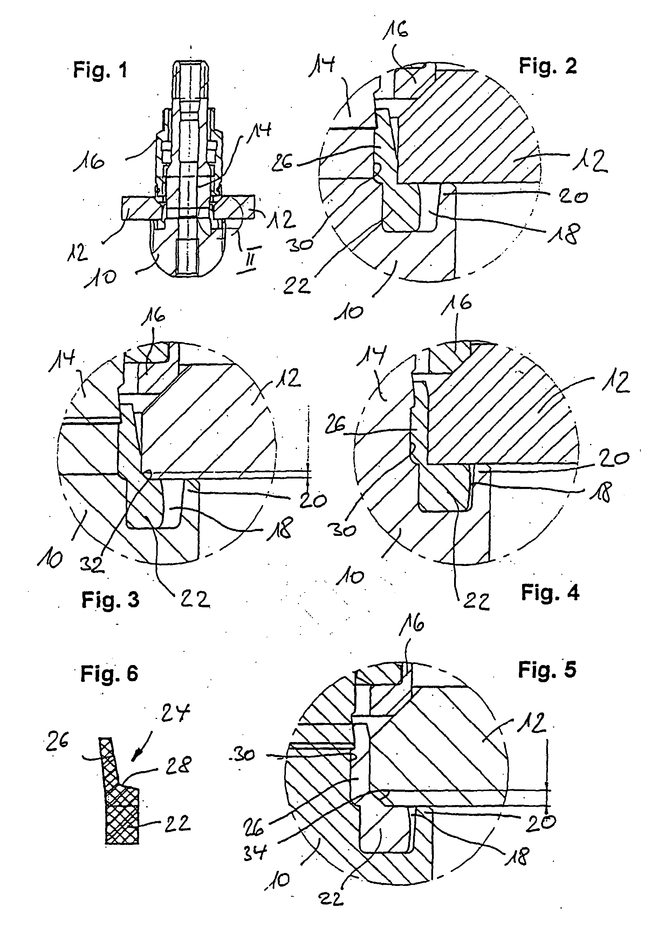

Die Fig. 1 zeigt in der schematischen Schnittansicht das erfindungsgemäße Reifenventil als Luftreifenventil gemäß einer ersten, bevorzugten Ausführungsform der vorliegenden Erfindung. Genauer gesagt sitzt ein unterer Ventilkörper 10 in einem Felgeninneren einer Fahrzeugfelge 12 (gezeigt ist mit dem Bezugszeichen 12 der Ventil- bzw. Felgenbohrungsbereich dieser Felge), und ein oberer Ventilkörperabschnitt 14 erstreckt sich durch die so beschriebene Felgenbohrung und bietet in ansonsten bekannter Weise die Möglichkeit zum Zugriff auf das Ventil. Auf ein Außengewinde des oberen Ventilkörperabschnitts 14 aufgesetzt ist eine Überwurfmutter 16, welche, vgl. insbesondere die Detailzeichnungen des Ausschnitts II in Fig. 1, auf einen querschnittlich abgeschrägten (gefasten) Bereich der Ventilbohrung in verspanntem Zustand (d.h. Montagezustand) greift.

Der untere Ventilkörperabschnitt 10 weist im Kontaktbereich mit dem Ventil- bzw. Felgenbohrungsbereich 12 eine umlaufende Ringnut 18 dergestalt aus, dass sich randseitig im unteren Ventilkörperabschnitt ein Ringabsatz 20 ausbildet, welcher ein Auf- bzw. Widerlager für den Felgenbohrungsbereich 12 anbietet. Gleichzeitig wird zwischen einer Unterfläche des Felgenbohrungsbereichs und der Ringnut eine nicht vollständig geschlossene, ringförmige Kammer ausgebildet, in welcher ein entsprechend ringförmiger Kammerabschnitt 22 einer als unverformter Querschnitt in Fig. 6 gezeigten Formdichtung 24 eingreift. Der Kammerabschnitt 22 der Formdichtung ist dabei so bemessen, dass er die Ringnut 18 nicht vollständig ausfüllt, sondern insbesondere auch noch Raum für (etwa thermisch bedingte) Ausdehnungseffekte lässt.

Wie in den Detailansichten der Fig. 2 bis 5 gezeigt, geht der ringförmige Kammerabschnitt 22 der Formdichtung 24 über in einen Vertikalabschnitt 26, welcher einstückig an dem Kammerabschnitt 22 ansitzt und, auf der in Fig. 6 linksseitig gezeigten Innenseite der Formdichtung, eine. übergangslos homogene, hohlzylindrische oder leicht konisch zulaufende Innenwand ausbildet. Im auswärts gelegenen Bereich ist zwischen dem ringförmigen Kammerabschnitt und dem Vertikalabschnitt eine Stufe 28 gebildet.

Die Fig. 2 bis 5 verdeutlichen verschiedene Montagezustände der ringförmigen Formdichtung in der Anordnung gemäß Fig. 1 bei verschiedenen Ventil- bzw. Felgenbohrungsdurchmessern und mehr oder weniger ausgeprägten Fasen im unteren Randbereich der Ventilbohrung: So verdeutlicht die Fig. 2 in unmittelbarem Vergleich mit der Fig. 4, wie bei relativ engem Ventilloch (Fig. 2) der Bohrungsrand des Ventilbohrungsbereichs die Formdichtung stärker komprimiert als bei relativ weiterem Ventilloch (Fig. 4). Bei jeder Konstellation ist jedoch durch den ringförmigen Kammerabschnitt 22 der Formdichtung die Ringnut 18 nicht vollständig ausgefüllt.

Die Fig. 3 bzw. 5 verdeutlichen, wie auch bei bestehender kleinerer Fase (Fig. 3, enges Ventilloch) bzw. größerer Fasierung (Fig. 5, weiteres Ventilloch) stets eine zuverlässige Dichtung dadurch zustande kommt, dass der untere Ventilbohrungsbereich auf die Stufe 28 der Formdichtung greift, gegen diese vorgespannt wird und diese entsprechend komprimiert, so dass in jedem denkbaren Toleranz- und Montagezustand eine zuverlässige, gleichwohl die Dichtung nicht kritisch belastende Abdichtwirkung entsteht, während gleichzeitig, durch festen Kontakt des durch die Überwurfmutter 16 gegen den Ringabsatz 20 gespannten Ventilbohrungsbereich 12, eine mechanisch äußerst belastbare, stabile Verbindung entsteht.

Die vorliegende Erfindung ist nicht auf die beschriebenen Ausführungsbeispiele beschränkt, so ist die vorliegende Erfindung nicht nur für Fahrzeugfelgen und Luftventile geeignet, sondern eignet sich prinzipiell für beliebige Gasventile od.dgl. im Zusammenwirken mit einer Felge, von innen oder von außen.

## Patentansprüche

1. Anordnung eines Reifenventils und einer Formdichtung, wobei das Reifenventil aufweist,
einen in eine Felgenbohrung einer Felge, insbesondere Fahrzeugfelge, durchgreifenden Ventilkörper,
der einen im montierten Zustand auf einer Seite der Felge, insbesondere im Felgeninneren, angeordneten unteren Ventilkörperabschnitt (10) sowie einen aus der Felgenbohrung ragenden oberen Ventilkörperabschnitt (14) ausbildet
und im Bereich des oberen Ventilkörperabschnitts zum Zusammenwirken mit einer Überwurfmutter (16) ausgebildet ist,
wobei
der untere Ventilkörperabschnitt einen ein Widerlager für einen flachen Randabschnitt (12) der Felgenbohrung anbietenden Ringabsatz (20), in welchen eine zum Randabschnitt offene Ringnut (18) eingeformt ist und gegen welchen der Randabschnitt (12) durch Anziehen der Überwurfmutter (16) verspannbar ist, so ausbildet, dass die Überwurfmutter (16) auf den Randabschnitt (12) greift und der Ringabsatz (20) zusammen mit der Überwurfmutter (16) in einem verspannten Zustand eine Metall-Metall-Verbindung mit hohem Anzugs- und Lösemoment ermöglicht,
und wobei zum Dichten der Felgenbohrung gegenüber dem Ventilkörper die Formdichtung (24) aus elastischem Material so vorgesehen ist, dass in dem montierten und verspannten Zustand ein ringförmiger Kammerabschnitt (22) der Formdichtung in die Ringnut (18) eingreift und dichtend an dem Randabschnitt der Felgenbohrung anliegt
und ein an dem Kammerabschnitt ansitzender, bevorzugt hohlzylindrischer Vertikalabschnitt (26) der Formdichtung den oberen Ventilkörperabschnitt umgreift und dichtend mit einer ringförmigen Stirnfläche der Felgenbohrung zusammenwirkt.

2. Anordnung eines Reifenventils und einer Formdichtung nach Anspruch 1, **dadurch gekennzeichnet, dass** der obere Ventilkörperabschnitt im Bereich der Felgenbohrung eine umlaufende Flachnut (30) aufweist, in welche der Vertikalabschnitt (26) der Formdichtung in dem montierten und verspannten Zustand eingreift.

3. Anordnung eines Reifenventils und einer Formdichtung nach Anspruch 1 oder 2, **dadurch gekennzeichnet, dass** die Felgenbohrung in einem Übergangsbereich zwischen dem flachen Randabschnitt und der Stirnfläche eine Fase (32, 34) aufweist, welche in dem montierten und verspannten Zustand auf einen ringabsatzförmigen Übergangsbereich (28) zwischen dem Kammerabschnitt und dem Vertikalabschnitt der Formdichtung gepresst wird.

4. Anordnung eines Reifenventils und einer Formdichtung nach einem der Ansprüche 1 bis 3, wobei die Formdichtung **gekennzeichnet ist durch** einen ringförmigen Kammerabschnitt (22) und einen einstückig daran ansitzenden, insbesondere hohlzylindrischen Vertikalabschnitt (26) aus einem ventiltauglichen elastischen Material, insbesondere Gummimaterial, wobei ein Übergangsbereich zwischen dem Kammerabschnitt und dem Vertikalabschnitt einen außenliegenden Ringabsatz (28) ausbildet, und der Kammerabschnitt und der Vertikalabschnitt innenseitig stufenlos ineinander übergehen
und der Kammerabschnitt so bemessen ist, dass er die Ringnut (18) des Reifenventils nicht vollständig ausfüllt.

5. Anordnung eines Reifenventils und einer Formdichtung nach einem der Ansprüche 1 bis 4, **dadurch gekennzeichnet, dass** die Formdichtung so ausgebildet ist, dass diese sich innenseitig in Richtung auf den Vertikalabschnitt und/oder im Bereich des Vertikalabschnitts konusartig verjüngt.

6. Anordnung eines Reifenventils und einer Formdichtung nach einem der Ansprüche 1 bis 5, **dadurch gekennzeichnet, dass** die Formdichtung so ausgebildet ist, dass diese sich außenseitig im Bereich des Vertikalabschnitts konusförmig verjüngt.

7. Anordnung eines Reifenventils und einer Formdichtung nach einem der Ansprüche 1 bis 6, **dadurch gekennzeichnet, dass** eine flache, ringförmige Dichtfläche des Ringabsatzes mit einer Außenwand des Kammerabschnitts und/oder einer Außenwand des Vertikalabschnitts einen Winkel ungleich 90° ausbildet.

8. Anordnung eines Reifenventils und einer Formdichtung nach Anspruch 7, **dadurch gekennzeichnet, dass** die Dichtfläche relativ zur durch die Felgenbohrung bestimmte Fläche um einen Winkel zwischen 10° und 20° geneigt ist.

## Claims

1. Arrangement of a tyre valve and a moulded seal, wherein the tyre valve comprises
a valve body which extends through a rim bore of a wheel rim, in particular a vehicle wheel rim,
and forms a lower valve body portion (10) arranged on one side of the wheel rim, in particular in the rim interior, in the assembled state, and an upper valve body portion (14) projecting out of the rim bore,
and is formed so as to cooperate with a union nut (16) in the region of the upper valve body portion,
wherein
the lower valve body portion forms an annular shoulder (20), said shoulder offering an abutment for a flat edge portion (12) of the rim bore, an annular groove (18) open to the edge portion being moulded into said shoulder, and it being possible for the edge portion (12) to be clamped against said shoulder by tightening the union nut (16), in such a way that the union nut (16) clamps the edge portion (12), and in a clamped state the ring shoulder (20) together with the union nut (16) enables a metal-metal connection with a high clamping and release torque to be produced,
and wherein the moulded seal (24) made from resilient material is provided to seal the rim bore with respect to the valve body in such a way that in the assembled and clamped state, an annular chamber portion (22) of the moulded seal engages in the ring groove (18) and rests in a sealing manner on the edge portion of the rim bore,
and a preferably hollow, cylindrical, vertical portion (26) of the moulded seal sits on the chamber portion and surrounds the upper valve body portion and cooperates in a sealing manner with an annular end face of the rim bore.

2. Arrangement of a tyre valve and a moulded seal according to claim 1, **characterised in that** in the region of the rim bore, the upper valve body portion comprises a peripheral shallow groove (30) into which the vertical portion (26) of the moulded seal engages in the assembled and clamped state.

3. Arrangement of a tyre valve and a moulded seal according to either claim 1 or claim 2, **characterised in that** the rim bore comprises, in a transition region between the flat edge portion and the end face, a chamfer (32, 34) which in the assembled and clamped state is pressed onto an annular-shoulder-like transition region (28) between the chamber portion and the vertical portion of the moulded seal.

4. Arrangement of a tyre valve and a moulded seal according to any one of claims 1 to 3, the moulded seal being **characterised by** an annular chamber portion (22) and a vertical portion (26), in particular a hollow, cylindrical vertical portion, sitting integrally thereon, made from a resilient material appropriate to a valve, in particular rubber material, a transition region between the chamber portion and the vertical portion forming an outward-lying ring shoulder (28), and the chamber portion and the vertical portion transitioning into one another smoothly on the inside, and the chamber portion being dimensioned in such a way as not completely to fill up the ring groove (18) of the tyre valve.

5. Arrangement of a tyre valve and a moulded seal according to any one of claims 1 to 4, **characterised in that** the moulded seal is formed so as to taper conically on the inside in the direction of the vertical portion and/or in the region of the vertical portion.

6. Arrangement of a tyre valve and a moulded seal according to any one of claims 1 to 5, **characterised in that** the moulded seal is formed so as to taper conically on the outside in the region of the vertical portion.

7. Arrangement of a tyre valve and a moulded seal according to any one of claims 1 to 6, **characterised in that** a flat, annular sealing surface of the ring shoulder forms an angle not equal to 90° with an outer wall of the chamber portion and/or an outer wall of the vertical portion.

8. Arrangement of a tyre valve and a moulded seal according to claim 7, **characterised in that** the sealing surface is tilted by an angle between 10° and 20° relative to the surface determined by the rim bore.

## Revendications

1. Agencement d'une valve de pneu et d'une garniture d'étanchéité moulée, la valve de pneu présentant
un corps de valve traversant un perçage de jante d'une jante, en particulier une jante de véhicule,
qui forme une partie de corps de valve inférieure (10) disposée à l'état monté sur un côté de la jante, en particulier à l'intérieur de la jante, ainsi qu'une partie de corps de valve supérieure (14) dépassant du perçage de jante
et est formé dans la zone de la partie de corps de valve supérieure pour la coopération avec un écrou-raccord (16),
dans lequel
la partie de corps de valve inférieure forme un décrochement annulaire (20) offrant un contre-appui pour une partie de bord (12) plane du perçage de jante, dans lequel une rainure annulaire (18) ouverte vers la partie de bord est formée et contre lequel la partie de bord (12) peut être bloquée par serrage de l'écrou-raccord (16) de sorte que l'écrou-raccord (16) s'engage sur la partie de bord (12) et le décrochement annulaire (20) permet conjointement avec l'écrou-raccord (16) dans un état bloqué une liaison métal-métal avec un couple de serrage et de desserrage élevé,
et dans lequel pour rendre étanche le perçage de jante par rapport au corps de valve, la garniture d'étanchéité moulée (24) en matériau élastique est prévue de sorte qu'à l'état monté et bloqué, une partie de chambre (22) annulaire de la garniture d'étanchéité moulée s'engage dans la rainure annulaire (18) et repose de manière étanche contre la partie de bord du perçage de jante,
et une partie verticale (26), de préférence cylindrique creuse, de la garniture d'étanchéité moulée, appliquée contre la partie de chambre, entoure la partie de corps de valve supérieure et coopère de manière étanche avec une surface frontale annulaire du perçage de jante.

2. Agencement d'une valve de pneu et d'une garniture d'étanchéité moulée selon la revendication 1, **caractérisé en ce que** la partie de corps de valve supérieure présente dans la zone du perçage de jante une rainure plane (30) périphérique, dans laquelle la partie verticale (26) de la garniture d'étanchéité moulée s'engage à l'état monté et bloqué.

3. Agencement d'une valve de pneu et d'une garniture d'étanchéité moulée selon la revendication 1 ou 2, **caractérisé en ce que** le perçage de jante présente dans une zone de transition entre la partie de bord plane et la surface frontale, un chanfrein (32, 34) qui est pressé à l'état monté et bloqué sur une zone de transition (28) en forme de décrochement annulaire entre la partie de chambre et la partie verticale de la garniture d'étanchéité moulée.

4. Agencement d'une valve de pneu et d'une garniture d'étanchéité moulée selon l'une quelconque des revendications 1 à 3, dans lequel la garniture d'étanchéité moulée est **caractérisée par** une partie de chambre (22) annulaire et une partie verticale (26) appliquée d'un seul tenant dessus, en particulier cylindrique creuse en un matériau élastique convenant à la valve, en particulier en un matériau caoutchouteux, une zone de transition entre la partie de chambre et la partie verticale formant un décrochement annulaire (28) extérieur et la partie de chambre et la partie verticale passant l'une dans l'autre côté intérieur en continu
et la partie de chambre est dimensionnée de sorte qu'elle ne remplisse pas complètement la rainure annulaire (18) de la valve de pneu.

5. Agencement d'une valve de pneu et d'une garniture d'étanchéité moulée selon l'une quelconque des revendications 1 à 4, **caractérisé en ce que** la garniture d'étanchéité moulée est formée de sorte que celle-ci se rétrécisse comme un cône côté intérieur en direction de la partie verticale et/ou dans la zone de la partie verticale.

6. Agencement d'une valve de pneu et d'une garniture d'étanchéité moulée selon l'une quelconque des revendications 1 à 5, **caractérisé en ce que** la garniture d'étanchéité moulée est formée de sorte que celle-ci se rétrécisse en forme de cône côté extérieur dans la zone de la partie verticale.

7. Agencement d'une valve de pneu et d'une garniture d'étanchéité moulée selon l'une quelconque des revendications 1 à 6, **caractérisé en ce qu'**une surface étanche plane, annulaire du décrochement annulaire forme avec une paroi extérieure de la partie de chambre et/ou une paroi extérieure de la partie verticale un angle inégal à 90 °.

8. Agencement d'une valve de pneu et d'une garniture d'étanchéité moulée selon la revendication 7, **caractérisé en ce que** la surface étanche est inclinée par rapport à la surface déterminée par le perçage de jante d'un angle compris entre 10 et 20 °.
